Europäisches Patentamt

European Patent Office

Office européen des brevets

(19)

(11) Publication number: **0 223 314 B1**

# EUROPEAN PATENT SPECIFICATION

(45) Date of publication of patent specification: **02.05.91**　(51) Int. Cl.⁵: **E04G  21/16**

(21) Application number: **86202046.8**

(22) Date of filing: **19.11.86**

(54) Device and method for arranging building panels.

(30) Priority: **22.11.85 NL 8503229**

(43) Date of publication of application:
**27.05.87 Bulletin  87/22**

(45) Publication of the grant of the patent:
**02.05.91 Bulletin  91/18**

(84) Designated Contracting States:
**BE DE FR GB LU NL**

(56) References cited:
**DE-A- 3 434 367**
**GB-A- 2 002 301**
**US-A- 3 335 883**
**US-A- 3 540 753**

(73) Proprietor: **Durox Gasbeton B.V.**
**Waaldijk 97**
**NL-4214 LC Vuren(NL)**

(72) Inventor: **Van Veen, Jan**
**Heijmansweer 18**
**NL-3371 RJ Hardinxveld Giesendam(NL)**

(74) Representative: **Konings, Lucien Marie Cor-**
**nelis Joseph et al**
**OCTROOIBUREAU ARNOLD & SIEDSMA**
**Sweelinckplein 1**
**NL-2517 GK Den Haag(NL)**

## Description

The invention relates to a method for arranging building panels in a building frame, whereby a series of building panels lying adjacently on their long edges is set up in a compartment of a building frame, whereby said panels rest with their ends on at least two supports placed at a distance from each other and whereby each time one building panel is removed from said series and is set up in its place in said building frame with its both long edges upright, whereby a supporting table of a device for arranging building panels is tilted about two axes transverse to each other relatively to a rolling sub-frame bearing said supporting table.

Such a method is disclosed in DE-A-3434367.

With said known method the mentioned device is used in combination with a car picking up the building panels in upright position and bringing them to a remote place in the building structure. Said known device may be useful in great buildings with large floors, but is not useful on small floors.

Building panels in a building frame with small floors are completely manually brought from the series up to their place in the building frame. In this method the movements of the building panels are also manually tilted. Setting up building panels is heavy work, which, for building panels of lightweight concrete with measurements in the order of magnitude of 10 x 60 x 270 cm at a weight of for example 130 kg, must be carried out by two people. Even then it is a heavy and difficult job that results in many back complaints.

The present invention has for its object to facilitate the work of erecting building panels with the use of a simple device, particularly useful on small floors. To this end the method of claim 1 is proposed.

It is noted that US-A-3335883 discloses a device for lifting and moving elongated items, such as beams, pipes etc., said device comprising a supporting table which can tilt on at least two axes transverse to each other and a sub-frame bearing said supporting table, said sub-frame having a substantially centrally located wheel shaft, said supporting table being able to pivot substantially about said central wheel shaft, said supporting table being attached for pivoting to said sub-frame on a swivel axle located between the two wheels of said central wheel shaft and extending transversely to said shaft and said pivot table having supports between said swivel axle and a table panel of said supporting table, which supports leave free a space for receiving a wheelpart and said supporting table in the standing receiving position pivoted on said swivel axle receiving the wheel in said receiving space between said swivel axle and said table panel. This device has a lever which is rigidly connected to the supporting table and which protrudes beyond the side thereof.

In the method according to the invention however, the lever is brought in lever-engagement with the supporting table before the swinging movement and is taken out of engagement afterwards so that the device has a small size which is advantageous when operating on small floors.

Features and preferred embodiments of the invented method are designated in the subclaims and explained in the description following hereafter with reference to a drawing.

In the drawing in diagram form:
Fig.1 shows an exploded perspective view of a preferred embodiment of a disassembled device used with the method according to the invention, with the auxiliary tools to be preferably used,
Figs. 2 and 3 show a partially broken away, perspective view of the device from Fig. 1 in assembled state in the two outermost tilted positions of the supporting table relative to the sub-frame,
Fig. 4 is a side view of the device from Fig. 3,
Figs. 5-10 show perspective views of successive steps in the performance of the method according to the invention with the device of Fig. 2, and
Fig. 11 is a front view of another device for performing the method according to the invention.

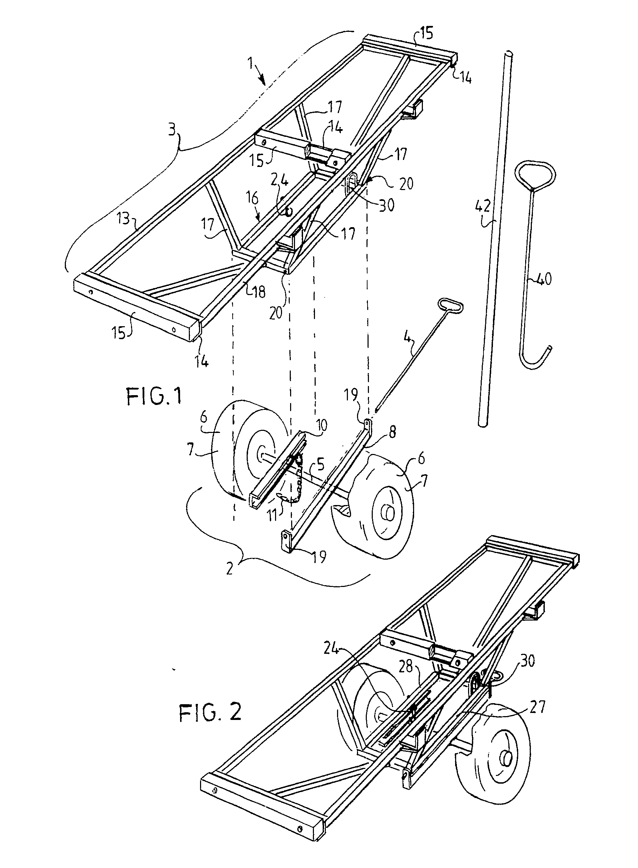

The device 1 with the method according to the invention that is shown in Fig. 2, is assembled from a sub-frame 2 and a supporting table 3 which are disconnectably attached together by means of a pivot rod 4. The sub-frame 2 consists of a non-rotating shaft 5 which has at both ends a freely rotatable wheel 6 mounted with bearings and having a pneumatic tyre 7. Close to the one wheel 6 there is welded on the shaft 5 and directed at right angles to it a pivot bar 8 which has two pivot ears 19, one on either side of the shaft 5. Close to the other wheel 6 a support 10 is present to which is fastened the end of a chain 11.

The supporting table 3 is built up of two longitudinal girders 13 and 18 having three transversely directed corner profiles 14 to the top side of which are attached protruding wooden beams 15 on which a building panel 9 can rest while running little risk of being damaged. A rectangular small frame 16 having longitudinal girders 27 and 28 is rigidly connected to longitudinal girders 13 and corner profiles 14 with supports 17 directed inclining upwards. At the longitudinal girder 27, that is, close to the ears 19, the frame 16 has pivot holes 20, with the result that the pivot rod 4 provided with a handle can be placed through these pivot holes 20 and ears 19, whereby the parts 2 and 3, which are in themselves light and can be carried separately from each other by hand, can be easily combined into a device 1 according to the invention. During assembly the free end of chain 11 is hooked onto a hook 24 which is attached to the longitudinal girder 28, which can be seen in the drawing. The longitudinal girder 27 has an upright, U-shaped gripper member 30 welded to it.

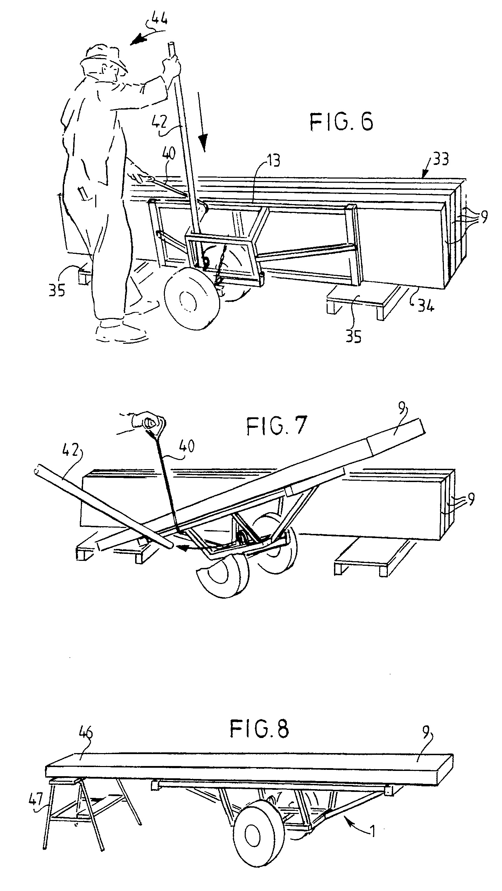

During performance of the method according to the invention building panels 9, as a series 33 of building panels 9 which are positioned against each other with their long side 34 on two wooden supports 35 located at a good distance from each other (fig. 6), are placed in a building frame 36. These building panels 9 have then to be arranged on end (see fig. 10). The method according to the invention can be carried out easily and quickly by one person using the device 1.

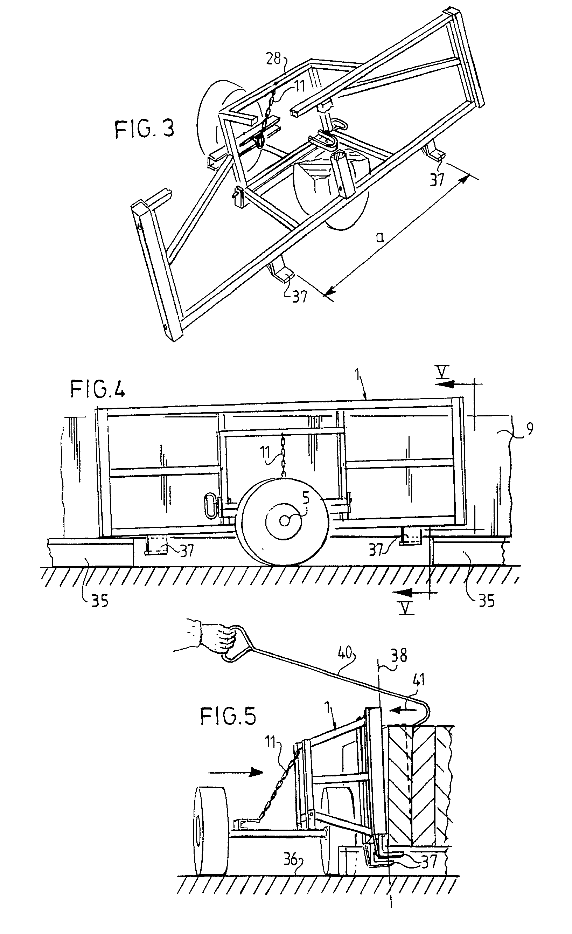

To this end the supporting table 3 is first tilted relative to sub-frame 2 from the position in fig. 2 into the slightly inclining, downward position of fig. 3. The chain 11 determines the maximum tilt position. Teeth 37 attached to the lower longitudinal girder 13 thereby protrude sideways outside the supporting surface 38. The teeth 37 are situated symmetrically on either side of shaft 5 at a substantial interval a from each other. The teeth 37 are located at a low level beneath the long side 34 of the foremost building panel 9 when the device 1, being manoeuvred at a slight slant, is moved against this building panel 9. When this device 1 arrives it will possibly come up against this building panel 9 with an end of the supporting table 3, while the other end of supporting table 3 is located a short way from it. The building panel 9 is then pulled a little towards the device 1 at this point with the hook 40 as according to arrow 41 with the result that it comes parallel to the lower edge of supporting table 3.

As according to fig. 6 a separate lever 42, for example steel pipe, is then inserted into the gripper member 30, the hook 40 is hooked around a support 17 close to the upper longitudinal girder 13 and the supporting table 3 is tipped over together with the building panel 9 as according to arrow 44 on pivot rod 4 by means of lever 42. By making a good choice of the arrangement of pivot rod 4, that is, at a height of for example 30 to 40 cm from the ground, little force is necessary when tipping over. The last part of the tipping movement is slightly decelerated with the same lever 42. When this tipping movement is carried out the hook 40 can if necessary be first pulled slightly to help start the tipping movement and if required the movement is cushioned somewhat at the end with the hook The lever 42 is removed (see fig. 7).

A piece of the building panel 9 is then if necessary sawn off, whereby an end 46 is then laid on a table 47. The device 1 then also serves as sawing table.

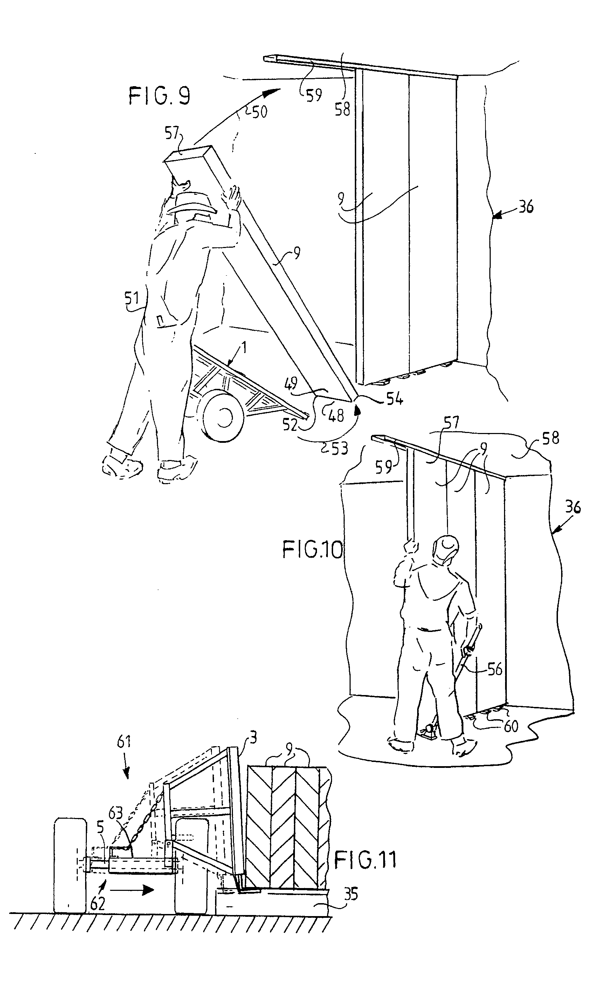

The building panel 9 is then moved with device 1 to the set-up location 48, whereby the lower side 49 of building panel 9 is set down near the set-up location 48, whereby the supporting table is tilted on the shaft 5. As in fig. 9 the building panel 9 is then lifted from the device 1, whereby building panel 9 is tilted on its lower edge 49 so as to be pointed upright as according to arrow 50. The person 51 hereby walks around the device, whereby the building panel 9 is also turned on the corner 52 in arrow direction 53, so that the corner 54 comes approximately up against the already arranged adjacent building panel 9. The building panel 9 to be handled is if necessary moved a little with swivel steps, which is not a heavy operation. When the building panel 9 is standing in position it is raised slightly with a kind of crow-bar 56 with the result that its upper edge 57 comes to rest in a U-profile 59 attached against the ceiling 58 of the frame 36. In this raised position wedges 60 are driven beneath the edge 49 whereby the setting-up of this building panel 9 is completed.

The device 61 of fig. 11 corresponds with device 1, with the understanding that the sub-frame 62 of the former has a bush 63 which can slide on the shaft 5, to which bush the pivot bar 8 is welded. As a result the downward tilted supporting table 3 can be placed against the foremost building panel 9 somewhat more easily, so that the first operation of placing the supporting table 3 parallel to the building panel 9 is superfluous.

There are several conceivable variants of the device 1. The sub-frame 2, instead of having one wheel axle with two wheels, can thus have for example three or four wheels, at least one of which is a swivelling wheel. In order to then still be able to swivel the supporting table 3 on a shaft which stands perpendicular to the tilting pivot rod 4, the third and possibly the fourth wheel can be raised during tilting on the fulcra of the other two wheels. Also conceivable is that for example one of the both ends of supporting table 3 has a fixed support which functions as the legs of a wheelbarrow for setting down the supporting table during sawing without a table 47 being necessary.

## Claims

1. Method for arranging building panels (9) in a building frame (36);
   whereby use is made of a device (1) comprising a supporting table (3) and a sub-frame (2) bearing said supporting table (3), said sub-frame having a substantially centrally located wheel shaft (5) about which said supporting table can pivot, said supporting table (3) being attached for pivoting to said sub-frame (2) on a swivel axle (4) located between two wheels (7) of said central wheel shaft (5) and extending transversely to said shaft (5), the supporting table having connecting means (17) between said swivel axle (4) and a bearing frame (13, 15, 18) of said supporting table (3), said connecting means (13, 15, 18) leaving free a space for receiving a wheel part, the supporting table (3) having panel engaging means at the edge of the bearing frame (13, 15, 18) projecting from the supporting plane of the table (3),

said method comprises the following steps:

a) a series of building panels (9) standing adjacently on their long edges is positioned in a compartment of said building frame (36), whereby said long edges rest near their ends on two supports (35) placed at a distance from each other;

b) each time one building panel (9) is removed from said series by:

b1) swinging the supporting table (3) relatively to the sub-frame (2) about said swivel axle (4) from a lying position into a standing receiving position in which said wheel part is received in said space;

b2) bringing said device (1) with its supporting table (3) in its standing position into a position whereby said panel engaging means (37) of said supporting table underly said building panel (9); and

b3) swinging said supporting table (3) together with said building panel about said swivel axle (4) from said standing receiving position into the lying position by means of a lever (42), which previously to this swinging movement is brought in lever engagement with the supporting table (3) and which is removed therefrom after use;

c) said device (1) together with said building panel (9) is wheeled to the intended place of mounting said building panel (9) in said building frame (36); and

d) said building panel (9) is set up in its place in said building frame (36) with its both long edges upright by firstly tilting the supporting table (3) together with said building panel (9) about said central wheel shaft (5).

2. Method as claimed in claim 1, characterized in that in step b3) the building panel (9) is moved from an adjacent building panel (9) of said series by means of a hook (40) and/or that the supporting table (3) is engaged by means of said hook (40) during the swinging movement of the supporting frame (3) to its lying position.

3. Method as claimed in claim 1 or 2, characterized in that between step b3) and step d) sawing operations are carried out on said building panel (9) lying on said supporting table (3).

4. Method as claimed in claim 1, 2 or 3, characterized in that during steps b1) and b2) the maximum tilting position is determined by means of a chain (11) arranged between said supporting table (3) and said sub-frame (2).

**Revendications**

1. Procédé pour mettre des panneaux de construction (9) en place dans une ossature de bâtiment (36), dans lequel on utilise un dispositif (1) comprenant une table support (3) et un sous-châssis (2) qui porte ladite table support (3), ledit sous-châssis possédant un essieu (5) placé en position sensiblement centrale, autour duquel ladite table support peut pivoter, ladite table support (3) étant montée pour basculer par rapport audit souschâssis (2) en tournant autour d'un axe de basculement (4) placé entre les deux roues (7) dudit essieu central (5) et orienté transversalement audit essieu (5), ladite table support possédant des moyens de liaison (17) compris entre ledit axe de basculement (4) et un châssis porteur (13,15,18) de ladite table support (3), lesdits moyens de liaison (13,15,18) laissant libre un espace approprié pour recevoir une partie d'une roue, la table support (3) possédant des moyens d'attaque du panneau situés le long du bord du châssis porteur (13,15,18) qui font saillie en dehors du plan support de la table (3), ledit procédé comprenant les phases suivantes :

a) on met une série de panneaux de construction (9), disposés verticalement les uns à côté des autres le long de leur grand côté, en place dans un compartiment de ladite ossature (36) du bâtiment, lesdits grands côtés reposant, dans les régions proches de leurs extrémités, sur deux supports (35) placés à un certain écartement l'un de l'autre ;

b) on prélève un panneau de construction (9) à la fois dans ladite série ;

b1) on bascule la table support (3) par rapport au sous-châssis (2) par rotation autour dudit axe de basculement (4) pour la faire passer d'une position à plat à une position verticale ou de réception dans laquelle ladite roue est logée dans ledit espace ;

b2) on amène ledit dispositif (1), avec sa table support (3) dans la position à peu près verticale, dans une position dans laquelle lesdits moyens d'attaque du panneau (37) de ladite table support sont placés sous ledit panneau de construction (9) ; et

b3) on bascule ladite table support (3), avec ledit panneau de construction, autour dudit axe de basculement (4), de ladite position à peu près verticale ou de réception, à la position à plat, au moyen d'un levier (42) qui, préalablement à ce mouvement de basculement, est mis dans une position de prise de bras de levier avec ladite table support (3) et qu'on dégage de cette table après utilisation ;

c) on fait rouler ledit dispositif (1), avec ledit panneau de cɔnstruction (9), jusqu'à l'emplacement voulu du montage dudit panneau de construction (9) dans ladite ossature de bâtiment (36) ; et

d) on ajuste ledit panneau de construction (9) à sa place dans ladite ossature (36) du bâtiment, en disposant ses deux grands côtés verticalement, en faisant tout d'abord pivoter ladite table support (3) avec ledit panneau de construction (9) autour dudit essieu central (5).

2. Procédé selon la revendication 1, caractérisé en ce que, dans la phase b3, on sépare le panneau de construction (9) d'un panneau de construction (9) adjacent de ladite série au moyen d'un crochet (40) et/ou on accroche la table support (3) au moyen dudit crochet (40) pendant le mouvement de basculement du châssis support (3) qui l'amène à sa position à plat.

3. Procédé selon la revendication 1 ou 2, caractérisé en ce que, entre la phase b3, et la phase d, on effectue des opérations de sciage sur ledit panneau de construction (9) couché sur ladite table support (3).

4. Procédé selon une des revendications 1, 2 et 3, caractérisé en ce que, pendant les phases b1 et b2, la position de basculement maximale est fixée au moyen d'une chaîne (11) interposée entre ladite table support (3) et ledit sous-châssis (2).

**Ansprüche**

1. Verfahren zum Anordnen von Bauplatten (9) in Baurahmen (36);

wobei eine Vorrichtung (1) verwendet wird, die einen Stütztisch (3) und einen den Stütztisch (3) tragenden Unterrahmen (2) mit einer im wesentlichen zentral angeordneten Radachse (5) aufweist, um welche der Stütztisch schwenkbar ist, wobei der Stütztisch (3) an dem Unterrahmen (2) auf einer Schwenkachse (4) schwenkbar befestigt ist, die zwischen zwei Rädern (7) der zentralen Radachse (5) angeordnet ist und sich quer zu der Radachse (5) erstreckt, wobei der Stütztisch Verbindungsmittel (17) zwischen der Schwenkachse (4) und einem Tragrahmen (13, 15, 18) aufweist, die Verbindungsmittel (13, 15, 18) Raum für einen Radteil freilassen und der Stütztisch (3) Plattenmitnehmermittel an dem Rand des Tragrahmens (13, 15, 18) aufweist, die über die Stützebene des Stütztisches (3) vorstehen, mit den folgenden Verfahrensschritten:

a) eine Reihe von Bauplatten (9), die einander benachbart auf ihren Langrändern stehen, wird in einen Bereich des Baurahmens (36) positioniert, wobei die Langränder nahe ihrer Enden auf zwei Stützen (35) liegen, die im Abstand voneinander angeordnet sind;

b) jeweils eine Bauplatte (9) wird aus der Reihe entfernt, indem

b1) der Stütztisch (3) relativ zu dem Unterrahmen (2) um die Schwenkachse (4) aus einer liegenden Stellung in eine aufrechte Aufnahmestellung geschwenkt wird, in welcher der Radteil in dem Raum aufgenommen ist;

b2) die Vorrichtung (1) mit ihrem Stütztisch (3) in ihrer stehenden Position in eine Position gebracht wird, in welcher die Plattenmitnehmermittel (37) des Stütztisches die Bauplatte (9) untergreifen; und

b3) der Stütztisch (3) zusammen mit der Bauplatte um die Schwenkachse (4) aus der aufrechten Aufnahmestellung in die liegende Stellung mittels eines Hebels (42) geschwenkt wird, welcher vor dieser Schwenkbewegung in aushebelnden Eingriff mit dem Stütztisch (3) gebracht wurde und von diesem nach der Benutzung entfernt wird;

c) die Vorrichtung (1) wird zusammen mit der Bauplatte (9) zu dem für die Aufstellung der Bauplatte (9) in dem Baurahmen (36) vorgesehenen Ort gefahren; und

d) die Bauplatte (9) wird an ihren Platz in dem Baurahmen (36) mit aufrecht stehenden Längsrändern gesetzt, indem anfänglich der Stütztisch (3) zusammen mit der Bauplatte (9) um die zentrale Radachse (5) gekippt wird.

2. Verfahren nach Anspruch 1, dadurch gekennzeichnet, daß im Schritt b3) die Bauplatte (9) von einer benachbarten Bauplatte (9) der Reihe mit Hilfe eines Hakens (40) wegbewegt wird und/oder daß der Stütztisch (3) während der Schwenkbewegung des Stützrahmens (3) in dessen liegende Stellung mit dem Haken (40) in Eingriff steht.

3. Verfahren nach Anspruch 1 oder 2, dadurch gekennzeichnet, daß zwischen den Schritten b3) und d) an der auf dem Stütztisch (3) liegenden Bauplatte (9) Sägeoperationen vorgenommen werden.

4. Verfahren nach Anspruch 1, 2 oder 3, dadurch gekennzeichnet, daß während der Schritte b1) und b2) die maximale Kipposition mittels einer Kette (11) bestimmt wird, die zwischen dem Stütztisch (3) und dem Unterrahmen (2) angeordnet ist.

FIG.1

FIG. 2

FIG. 3

FIG.4

FIG.5

FIG. 6

FIG. 7

FIG.8

FIG.9

FIG.10

FIG.11